# EUROPÄISCHE PATENTSCHRIFT

(11) **EP 0 406 644 B1**
(45) Veröffentlichungstag und Bekanntmachung des Hinweises auf die Patenterteilung: **30.11.1994**
(21) Anmeldenummer: 90111900.8
(22) Anmeldetag: 22.06.1990
(51) Int. Cl.: B02C 15/04

(54) **Luftstrom-Wälzmühle**
Air current-roller mill
Broyeur à rouleaux à courant d'air

(30) Priorität: 04.07.1989 DE 3921986
(43) Veröffentlichungstag der Anmeldung: 09.01.1991
(73) Patentinhaber: LOESCHE GMBH, D-40549 Düsseldorf (DE)
(72) Erfinder: Brundiek, Horst, Dipl.-Ing., D-4044 Kaarst 1 (DE)
(74) Vertreter: Heim, Hans-Karl, Dipl.-Ing.

(56) Entgegenhaltungen:
- DE-C- 523 974
- FR-A- 2 524 819

## Beschreibung

Die Erfindung betrifft eine Luftstrom-Wälzmühle gemäß Oberbegriff des Anspruchs 1.

Eine derartige Luftstrom-Wälzmühle ist z.B. aus der DE-PS 20 19 005 bzw. der EP 0 173 065 A2 bekannt und in Fig. 1 dargestellt.

Zur Verdeutlichung der bei diesen herkömmlichen Luftstrom-Wälzmühlen bestehenden Probleme wird eine derartige Luftstrom-Wälzmühle 50 mit ihren wesentlichen Baugruppen und ihrer Funktionsweise nachfolgend kurz dargestellt.

Die auf einem Fundament stehende Luftstrom-Wälzmühle 50 wird von einem Gehäuse 51 meist luftdicht umschlossen. Die gesamte Mahlanlage besteht dabei aus einer unteren Wälzmühle 52, über der im oberen Bereich ein integrierter Sichter 11 installiert ist. Als einzige Baugruppe der Wälzmühle 52 wird die Mahlschüssel 3 über einen Antrieb 4 in Rotation versetzt. Das von oben oder von der Seite auf die Mahlschüssel 3 zugeführte Mahlgut wird zwischen den federnd angepreßten Mahlwalzen 9 und der Mahlschüssel 3 zerkleinert. Die federnde Anpressung kann z.B. über einen Schwinghebel 10 und eine damit zusammenwirkende Hydraulikzylinder-Einrichtung 17 erfolgen. Die Mahlwalzen 9 haben herkömmlicherweise keinen separaten Antrieb, sondern werden allein durch den Reibschluß mit der Mahlschüssel 3 bzw. dem auf der Mahlschüssel 3 vorhandenen Mahlbett des Mahlgutes in Drehung versetzt. Die über den Zufuhrkanal 6 und den Leitschaufelkranz 16 einströmende Luft fördert das von der Mahlschüssel 3 nach dem Überrollen durch die Mahlwalzen 9 abgeschleuderte Gutgemisch aus Fertig- und Grobkorn nach oben in den Bereich des Sichters 11. Durch den über einen eigenen Rotorantrieb 14 angetriebenen Rotor 12 wird entsprechend der Rotation und dem aufsteigenden Volumenstrom des Luft-Staubgemisches 13 Überkorn abgewiesen, so daß dieses zusammen mit einem Teilluftstrom wieder auf die Mahlschüssel 3 im Bereich einer sogenannten Wirbelsenke 8 zurückfällt. Das Feingut bzw. Fertiggut verläßt hingegen den Sichter 11 über den Feingut-Auslaß 15 nach oben.

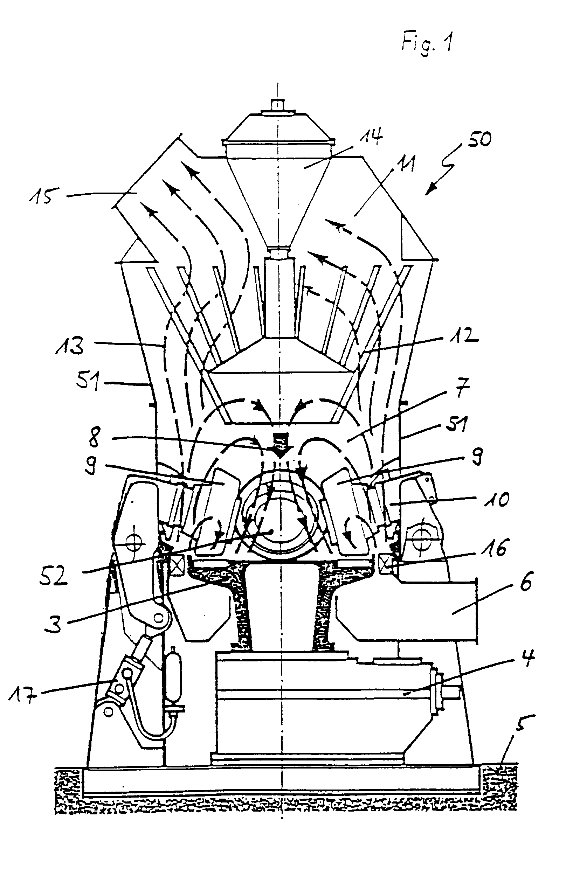

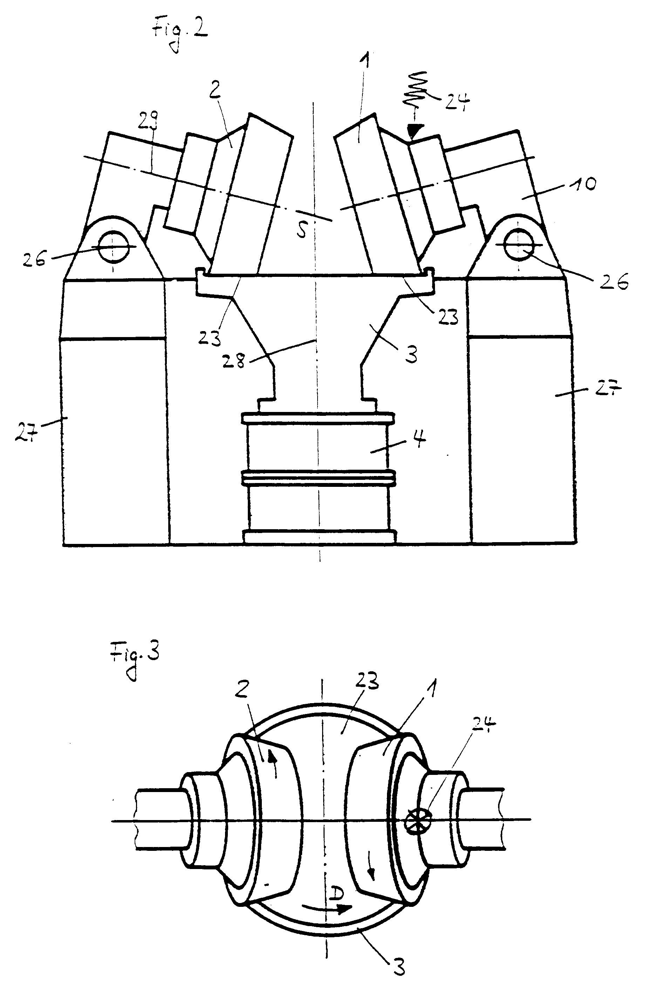

Diese sich normalerweise einstellenden Strömungsverhältnisse des Luft-Staubgemisches sind in Fig. 1 mit unterbrochenen Linien als Stromfäden dargestellt. Wie daraus erkennbar ist, bildet sich unterhalb des Sichterrotors 12 im Zentrum der Wälzmühle eine Wirbelsenke 8, wobei hierin nicht nur Mahlgutpartikeln, sondern auch Luft bzw. Gas nahezu im Kreislauf nach unten auf die Mahlschüssel 3 zurückgeführt werden. Dieses Luft-Staubgemisch wird von den Mahlwalzen 9 eingezogen und überrollt. Hierbei entweicht naturgemäß die Luft.

Verständlicherweise hängen diese sich einstellenden Strömungsverhältnisse im Innenraum 7 der Luftstrom-Wälzmühle 50 stark von der gewünschten Produktfeinheit ab. Bei Standard-Auslegungen derartiger Mahlanlagen, wie sie im Bereich der Hartzerkleinerung bei Zement-Rohmaterial-Kohlemahlung üblich sind, wird im Mittel ein Staub produziert, der eine Feinheit von ca. 10% bis 35% R DIN 0,09 besitzt.

Sofern man mit der Luftstrom-Wälzmühle 50 einen sehr viel feineren Staub als 10% R DIN 0,09 erzeugen will, wird das vom Sichter 11 abgewiesene Überkorn auch sehr viel feiner. Da der Auftrieb der Feinstgrieße in der Luft höher ist als der der Grobgrieße, wird demzufolge auch der Schwerkraftanteil, der das Überkorn auf die Mahlschüssel 3 zurückführt, geringer. Das bedeutet letztlich, daß eine extrem hoch belüftete "Staubwolke" auf die Mahlschüssel 3 zurückfällt bzw. zurückgeführt wird. Diese Staubwolke kann aufgrund einer sehr geringen inneren Reibung in physikalischer Hinsicht nahezu mit einer Flüssigkeit verglichen werden.

Bei der Vermahlung von sehr harten und spröden sowie trockenen Mahlgütern, wie z.B. Schlacken und Zementklinker, zeigt die Erfahrung, daß die wirtschaftlichste Erzeugung dieser Mahlprodukte im Feinbereich sinnvollerweise mit deutlich höheren spezifischen Mahlkräften erfolgen muß, als sie bislang für Mahlgüter, wie Kalkstein, Zement-Rohmaterial und Kohle üblich sind. Dabei tritt das Problem auf, daß einerseits ein sehr stark belüftetes Mahlbett auf der Mahlschüssel 3 aufgebaut und gehalten werden muß und andererseits, daß dieses belüftete Mahlbett mit Hilfe sehr hoher spezifischer Kräfte zerkleinert werden muß. Das Einziehen des stark belüfteten Mahlgutes führt häufig zu einem Slip-stick-Effekt. Das stark belüftete Mahlgut staut sich zunächst vor den Mahlwalzen an, wobei die Luft aus dem Staub-Luftgemisch verdrängt wird. Auf diese Weise bildet sich vor den Mahlwalzen eine kontinuierlich wachsende Staubwelle, die mit der Bugwelle eines Schiffes verglichen werden könnte.

Da die Mahlwalzen allein über Reibschluß mit dem Mahlbett bzw. dem Mahlgut angetrieben und mitgenommen werden, wird dieses erforderliche Koppelmedium zu den Mahlwalzen sozusagen erst dann wieder ausreichend stabil, wenn genügend Luft aus dem Staub-Luftgemisch des stark belüfteten Mahlbetts verdrängt ist. Zu diesem letztgenannten Problem tritt hinzu, daß sich durch ein längeres Anstauen einer derart wachsenden Staubwelle schnell eine Art Keil aus Staub vor den Mahlwalzen aufbaut. Hierdurch stellt sich unvermeidlich der weitere Nachteil ein, das Mahlbett zügig und kontinuierlich unter die gefederten Mahlwalzen zu ziehen. Die Mahlwalzen, die aufgrund dieser physikalischen Verhältnisse z.B. in ihrer Drehzahl abfallen oder sogar stehenbleiben können, werden demzufolge ruckartig von dem angestauten Staubkeil angestoßen und müssen dann erst wieder auf ihre Durchschnittsgeschwindigkeit beschleunigt werden.

Diese vorausgehend dargelegten Nachteile und Funktionsabläufe führen zu den erwähnten Slip-stick-Effekten an den Mahlwalzen, die sich letztlich in starken Mühlenvibrationen äußern. Abgesehen von mechanischen Schäden, die aufgrund dieses Gleit- und Blockiereffektes an der Luftstrom-Wälzmühle auftreten können, wird bei dieser diskontinuierlichen Arbeitsweise der gesamten Anlage auch der Mühlendurchsatz beeinträchtigt und reduziert.

Zusätzlich zu den vorausgehend genannten Problemen besteht bei der Zerkleinerung von sehr harten Mineralien auf extreme Feinheiten das Problem, das maßgeblich durch Slip-stick-Effekte diskontinuierlich gebildete Mahlbett nicht noch durch die erforderlichen hohen spezifischen Mahldrücke aufzureißen.

Ferner ist aus der DD-PS 205 079 ein Verfahren und eine Vorrichtung zur Durchsatzsteigerung und Energie-Einsparung bei Wälzmühlen zur Zerstörung der Packungsstruktur des verdichteten Mahlgutes und Umlagern und Aufwirbeln des Mahlgutes bekannt.

Das zermahlene Fertigprodukt wird durch einen Sicht-Luftstrom von dem horizontal rotierenden Mahlteller ausgetragen. Die Mahlgutaufgabe erfolgt durch die umlaufenden Mahlkörper, hinter denen ein ortsfester Kratzer aus verschleißfestem Material starr oder federbelastet so angebracht ist, daß das Mahlbett vom Mahlteller angehoben und aufgewirbelt wird. An Stelle des Kratzers kann eine ortsfest rotierende Walze starr oder federbelastet angebracht sein, die jedoch mit einer unterschiedlichen Umfangsgeschwindigkeit als der Mahlteller rotiert, um ein Aufreißen des Mahlbettes zu erreichen.

Diesem Stand der Technik liegt das Ziel zugrunde, die bei Zerkleinerungsvorgängen in Wälzmühlen zunehmende Verdichtung des Mahlgutes zu vermeiden.

Aus der DE-C 523 974 ist eine Federrollenmühle mit gelochten, geschlitzten oder siebartig ausgebildeten Prallwänden bekannt, die oberhalb der Mahlbahn starr am Gehäuse befestigt sind und den gesamten Raum zwischen zwei Mahlrollen einnehmen. Durch diese Prallwände soll eine Vorsichtung oder Siebung durchgeführt werden, um zu verhindern, daß nicht genügend zerkleinertes Mahlgut durch den Luftstrom von der Mahlbahn weggeführt wird. Um den Feingutaustrag gegen den Widerstand der Prallwände zu gewährleisten, ist eine entsprechende Luftströmung erforderlich. Diese bewirkt eine Auflockerung oder Aufwirbelung des Mahlbettes vor je der Mahlrolle.

Eine zusätzliche Luftzufuhr ist auch bei der Luftstrom-Rollenmühle der FR-A-25 24 819 vorgesehen. Um eine Verbesserung der Klassierung zu erreichen, wird mit hinter den Mahlwalzen angeordneten Schrappern das Mahlgut aufgebrochen und zusätzlich durch einen gesondert zugeführten Luftstrom aufgewirbelt. Es erfolgt eine starke Belüftung des Mahlgutes, durch die der Feingutaustrag verbessert werden soll. Zusätzlich sind zwischen den Mahlwalzen Rückführschrapper vorgesehen, die bogenförmig bis in das Zentrum des Mahltisches reichen, um das in diesem Bereich zurückfallende Grobgut den Mahlwalzen zuzuführen. Da die Rückführschrapper starr und mit einem Abstand oberhalb des Mahltisches angeordnet sind, nivellieren sie das der jeweils nachfolgenden Mahlwalze zugeführte Mahlgut, ohne jedoch die Beschaffenheit des zuvor aufgebrochenen und stark belüfteten Mahlbettes selbst zu verändern. Eine Beeinflussung der bei Mahlgut mit hohen Feinheitsgraden auftretenden, nachteiligen Slip-Stick-Effekte kann mit den Rückführschrappern nicht erreicht werden.

Der Erfindung liegt die **Aufgabe** zugrunde, eine Luftstrom-wälzmühle zu schaffen, die mit einfachen, effizienten Mitteln eine besonders wirkungsvolle Beeinflussung des Mahlbettes, insbesondere bei hohen Feinheitsgraden, ermöglicht, so daß eine Vergleichmäßigung des Funktionsablaufes und eine hohe Durchsatzleistung bei kontinuierlicher Arbeitsweise erreicht werden.

Die Aufgabe wird erfindungsgemäß durch die Merkmale des kennzeichnenden Teils des Anspruches 1 gelöst. Vorteilhafte und zweckmäßige Ausgestaltungen sind in den Merkmalen der Unteransprüche und in der Figurenbeschreibung aufgenommen.

Ein wesentlicher Gedanke der Erfindung kann darin gesehen werden, bei Luftstrom-Wälzmühlen zusätzlich zu den Mahlwalzen, die auch als Arbeitswalzen bezeichnet werden können, zur Vergleichmäßigung des Mahlbettes eine Vorverdichtungseinrichtung vorzusehen, die jeweils der oder den Mahlwalzen zugeordnet ist.

Vorteilhafterweise ordnet man funktionsgemäß vor jeder Mahlwalze eine derartige Vorverdichtungseinrichtung an, damit die "Bugwelle" des Luft-Staub-Gemisches vor einer Mahlwalze verhindert werden kann und gleichzeitig ein bereits homogenisiertes Mahlbett, auch im Sinne einer gleichmäßigen Dicke, der nachfolgenden Mahlwalze zugeführt wird.

Als Vorverdichtungseinrichtung, welche auch als Verdicht- oder Glatteinrichtung bezeichnet werden kann, wählt man geeigneterweise eine Vorverdicht- bzw. Verdichtwalze, die üblicherweise zwischen zwei Mahlwalzen angeordnet ist.

Im Gegensatz zur Mahlwalze, die zur Erzeugung der hohen Mahldrücke kraftbeaufschlagt ist, insbesondere durch eine Federeinrichtung, wird die Vor-Verdichtwalze allein durch ihr Eigengewicht und gegebenenfalls ein Federdämpfungssystem auf das Mahlbett gepreßt, damit sie ohne Erzeugung von Schwingungen und nur über das Koppelmedium des Mahlgutes durch Reibung angetrieben mitrollt. Eine Zerkleinerungsarbeit wird daher üblicherweise von der Vorverdichtwalze nicht geleistet.

Der vermeintliche Zusatzaufwand durch Verdichtwalzen amortisiert sich dadurch, daß die Verdichtwalzen das Entlüften des Mahlbettes übernehmen und dieses glätten. Dies resultiert vor allen Dingen aus der niedrigen Auflagekraft der Verdichtwalzen, da diese nicht die Tendenz besitzen, das belüftete Mahlbett in Art einer "Bugwelle" anzustauen, um es dann eventuell durch Schieben zu zerreißen.

In der Gesamtbetrachtung wird daher den Mahlwalzen, die die eigentliche Arbeit der Zerkleinerung leisten, somit ein ideal präpariertes Mahlbett für die Zerkleinerung angeboten.
Erste Versuche, bei denen man zwei Walzen von ihrer üblichen Federbelastung zur Erzeugung der hohen Mahldrücke befreite, und man diese Walzen nur mit ihrem Eigengewicht auf dem Mahlbett rollen ließ, zeigten im Zusammenwirken mit zwei federbelasteten Mahlwalzen teilweise sogar eine Steigerung der Durchsatzleistung der Luftstrom-Wälzmühle.
Dies ist umso erstaunlicher, als die von der Federbelastung befreiten, nunmehr als Verdichtwalzen eingesetzten Walzen keine Mahlarbeit leisteten.
Die Reibungs- und Bremskräfte gegenüber der rotierenden Mahlschüssel wurden daher reduziert, wobei vor allen Dingen die Auslegung auf bisher erforderliche Spitzenleistungen durch teilweise ruckartigen Betrieb erheblich reduziert werden kann.

Die Erfindung eröffnet daher die konstruktive und wirtschaftliche Möglichkeit, in Zukunft die für die Mahlleistung herangezogenen federbelasteten Mahlwalzen in ihrer Anzahl zu halbieren und ihnen eine gleiche Anzahl wesentlich leichterer und billigerer Verdichtwalzen zuzuordnen. Im Extremfall kann daher auf einer Mahlschüssel eine Mahlwalze bzw. Arbeitswalze zusammen mit einer Verdichtwalze angeordnet werden. Üblicherweise wird die Anzahl der Walzen jedoch größer sein, wobei jedoch vorteilhafterweise jeder Mahlwalze eine Verdichtwalze zugeordnet wird.

Bei dieser konstruktiven Auslegung braucht die Kräftebemessung und Bemessung der Durchsatzleistung dieser Luftstrom-Wälzmühlen nur noch mit Hilfe der Wirkung der Mahlwalzen zu erfolgen, wobei deren Effektivität aufgrund des von den Verdichtwalzen präparierten Mahlbettes etwa im Bereich bis zu einem Faktor 2 gesteigert werden kann.

Da abhängig von den spezifischen Einsatzbedingungen und dem Mahlgut die Durchmessergrößen der Walzen sehr unterschiedlich sein können, können teilweise Verdichtwalzen eingesetzt werden, die das 0,1-fache des Durchmessers der Mahlwalze aufweisen. Denkbar sind jedoch auch Verdichtwalzen bis zum 2-fachen Durchmesser der Mahlwalzen.

Sofern man eine reine Rollbewegung der Verdichtwalzen für die Homogenisierung des Mahlbettes als geeignet erachtet, werden die Verdichtwalzen mit ihrer Drehachse so ausgerichtet, daß deren Durchstoßpunkte mit der Drehachse der Mahlschüssel in der Ebene der Mahlbahn zu liegen kommt. Gleit- und Rutschbewegungen der Verdichtwalzen werden dadurch vermieden.

Sofern man jedoch der reinen Rollbewegung der Verdichtwalzen gezielt eine Gleitbewegung überlagern will, empfiehlt es sich, den Durchstoßpunkt der Drehachsen der Verdichtwalzen mit der Drehachse der Mahlschüssel unterhalb oder oberhalb der Ebene der Mahlbahn zu wählen.

Anstelle von Verdichtwalzen sind auch Gleitschuhe oder ähnliche Einrichtungen denkbar. Hierbei muß jedoch eine höhere Reibung und eine höhere Antriebsleistung für die Wälzmühle in Kauf genommen werden.

Im Hinblick auf eine weitere Verbesserung der Funktionsweise unter Vermeidung von Slip-Stick-Effekten kann man gegebenenfalls die eigentlichen Arbeits- bzw. Mahlwalzen auch zusätzlich zur Mahlschüssel mit einem separaten Rotationsantrieb ausstatten.

Das erfindungsgemäße Konzept eröffnet daher ein Verfahren zur effektiven Hartzerkleinerung von Zement-Klinker oder dergleichen Materialien, bei dem das Mahlgutbett lokal vor der Zerkleinerung einer Vorverdichtung bzw. Vorglättung unterzogen wird. Wie sich experimentell gezeigt hat, kann auf diese Weise der Wirkungsgrad einer Luftstrom-Wälzmühle im Hinblick auf Durchsatzleistung des gemahlenen Gutes und den erforderlichen Energiebedarf verbessert werden.

Die Erfindung wird nachstehend unter Berücksichtigung des prinzipiellen Aufbaues einer Luftstrom-Wälzmühle, wie sie vorausgehend bereits zu Fig. 1 dargelegt wurde, noch näher beschrieben. Es zeigen:
- Fig. 1: einen prinzipiellen Aufbau einer Luftstrom-Wälzmühle;
- Fig. 2: die schematische Darstellung des Bereichs der Mühle mit zwei Walzen in Seitenansicht;
- Fig. 3: eine Draufsicht auf die Mahlschüssel nach Fig. 2;
- Fig. 4: eine Draufsicht auf eine weitere Variante der Erfindung mit zwei Mahlwalzen und zwei Verdichtwalzen und
- Fig. 5: eine weitere Variante der Erfindung in Draufsicht auf eine Mahlschüssel mit drei Mahlwalzen und drei kleinen Verdichtwalzen.

In Fig. 2 ist in einer Seitenansicht der für die Erfindung maßgebende Teil einer Wälzmühle ohne Sichter 11 und umschließendes Gehäuse 51 dargestellt.

Im Beispiel wird die Mahlschüssel 3 um ihre Achse 28 durch einen Antrieb 4 rotativ angetrieben. Auf der Mahlschüssel 3 werden durch Reibschluß mit dem auf der Oberfläche vorhandenen Mahlgut im Bereich der radial außen liegenden Mahlbahn 23, die auch als Mahlbett bezeichne werden kann, eine Mahlwalze 1 und gegenüberliegend eine Verdichtwalze 2 durch Reibschluß in Rotation versetzt. Die Verdichtwalze als Vorverdichtungs einrichtung bewirkt eine Entlüftung des Mahlbettes 23.

Die Mahlwalze 1 ist dabei schematisch durch eine von oben wirkende Federkraft 24 kraftbeaufschlagt, so daß der gewünschte Zerkleinerungsdruck auf das Mahlbett 23 aufgebracht werden kann. Unter Einbeziehung von Fig. 1 kann eine derartige Kraft auch durch eine im Lagergestell 27 angeordnete Hydraulikzylinder-Einrichtung 17 erzeugt werden.

Die Walzen, sowohl Mahlwalzen 1 wie Verdichtwalzen 2, sind über einen Schwinghebel 10 und eine Gelenkachse 26 an entsprechenden Lagergestellen 27 gehaltert.

In der Darstellung nach Fig. 1 liegt der Schnittpunkt S der Drehachse 29 der Verdichtwalze 2 mit der Drehachse 28 oberhalb der Ebene der Mahlbahn. Dies bewirkt, daß die Verdichtwalze 2 keine reine Rollbewegung auf der Mahlschüssel 3 durchführt, sondern dieser Rollbewegung eine gezielte Gleitbewegung überlagert ist.

Unter Einbeziehung der Fig. 3, in der das Beispiel nach Fig. 2 mit Draufsicht auf die Mahlschüssel 3 teilweise dargestellt ist, erkennt man die durch Pfeile markierten Drehrichtungen der einzelnen Baugruppen. Aufgrund des Reibschlusses der Walzen 1,2 mit der Mahlschüssel 3, die in Drehrichtung D angetrieben ist, ergibt sich daher zwangsweise die Drehrichtung der im Beispiel um 180° gegenüberliegenden Walzen.
Im Beispiel nach Fig. 4 ist in vergleichbarer Weise wie mit Fig. 3 eine weitere Ausführungsform mit insgesamt vier Walzen dargestellt. Die sich gegenüberliegenden zwei Verdichtwalzen 2a und 2b weisen in dieser Ausführungsform etwa gleiche Größe auf wie die zwei Mahlwalzen 1a und 1b. Von Bedeutung ist insbesondere, daß die Breite der Verdicht- und Mahlwalzen 2a, 1a auf der Mahlbahn 23 etwa gleich groß sind, damit die gewünschte Homogenität des Mahlbettes erreicht wird.

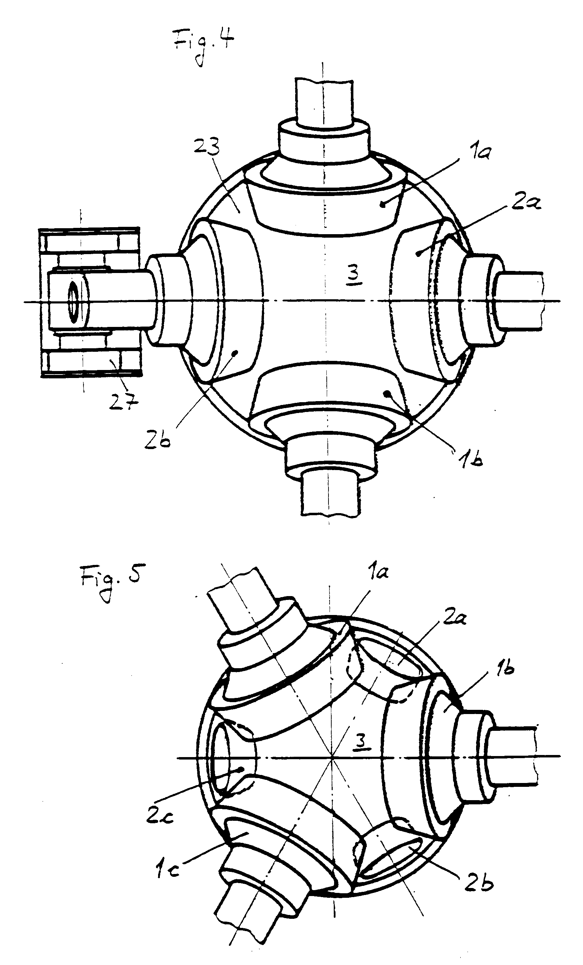

In dem weiteren Beispiel nach Fig. 5, das schematisch die Draufsicht auf eine Mahlschüssel 3 zeigt, sind sozusagen unterhalb der einen wesentlich größeren Durchmesser aufweisenden Mahlwalzen 1a, 1b, 1c kleinere Verdichtwalzen 2a, 2b, 2c angeordnet. Die Achsen der Verdichtwalzen und die Schwinghebel sind dabei aus Vereinfachungsründen weggelassen worden, wobei jedoch je nach Größe der Verdichtwalzen auch eine Anbringung am Gehäuse oder eine Beiordnung auf dem entsprechenden Lagergestell (Fig. 2) der zugeordneten Arbeitswalze denkbar ist.

Funktionsmäßig wird daher durch die Verdichtwalzen die "Bugwelle" des Luft-Staubgemisches gerade bei hohen Feinheitsgraden vor der zugeordneten Mahlwalze eliminiert und eine Vergleichmäßigung des Mahlbettes in seiner Dicke herbeigeführt, so daß durch die Vermeidung von Diskontinuitäten im Betriebsablauf eine höhere Durchsatzleistung der Gesamtanlage erreicht werden kann.

## Patentansprüche

1. Luftstrom-Wälzmühle
mit mindestens einer stationären, drehbaren Mahlwalze, die federnd gegen eine rotierend angetriebene Mahlschüssel bzw. das darauf vom Mahlgut gebildete Mahlbett anpreßbar ist, und
mit mindestens einer Einrichtung zur Vergleichmäßigung des der jeweils nachfolgenden Mahlwalze zugeführten Mahlgutes,
dadurch **gekennzeichnet**,
daß zur Vergleichmäßigung eine Vorverdichtungseinrichtung (2a, 2b, 2c) vorgesehen ist, die jeweils der oder den Mahlwalzen (1a, 1b, 1c) zugeordnet ist.

2. Luftstrom-Wälzmühle nach Anspruch 1
mit einem über der Wälzmühle angeordneten, integrierten Sichter, wobei das Mahlgut-Luft-Gemisch im wesentlichen vom Wälzmühlenzentrum her der Mahlschüssel und den Mahlwalzen zugeführt ist,
dadurch **gekennzeichnet,**
daß jeder Mahlwalze (1a,1b,1c) eine Vorverdichtungseinrichtung (2a,2b,2c) funktionsmäßig vorgeordnet ist.

3. Luftstrom-Wälzmühle nach Anspruch 1 oder 2,
dadurch **gekennzeichnet,**
daß die Vorverdichteinrichtung (2a,2b,2c) als durch Reibschluß mit der Mahlschüssel (3) bzw. dem Mahlbett (23) angetriebene Verdichtwalze (2a,2b,2c) oder als Gleitschuh ausgebildet ist.

4. Luftstrom-Wälzmühle nach Anspruch 3,
dadurch **gekennzeichnet**,
daß die Verdichtwalze(n) (2a,2b,2c) allein durch ihr Eigengewicht auf der Mahlschüssel (3) bzw. dem Mahlbett (23) aufliegen.

5. Luftstrom-Wälzmühle nach einem der Ansprüche 3 bis 4,
dadurch **gekennzeichnet**,
daß der Durchmesser der Verdichtwalzen (2a,2b,2c) etwa das 0,1- bis 2,0-fache des Durchmessers der Mahlwalze(n) (1a,1b,1c) beträgt.

6. Luftstrom-Wälzmühle nach einem der Ansprüche 1 bis 5,
dadurch **gekennzeichnet**,
daß jede Verdichtwalze (2a,2b,2c) so angeordnet ist, daß der Durchstoßpunkt (S) ihrer Drehachse (29) mit der Drehachse (28) der Mahlschüssel (3) zur Erreichung einer reinen Rollbewegung auf der Ebene der Mahlbahn (23) liegt.

7. Luftstrom-Wälzmühle nach einem der Ansprüche 1 bis 5,
dadurch **gekennzeichnet**,
daß jede Verdichtwalze (2a,2b,2c) so angeordnet ist, daß der Durchstoßpunkt ihrer Drehachse (29) mit der Drehachse (28) der Mahlschüssel (3) unterhalb oder oberhalb der Ebene der Mahlbahn (23) liegt, um einer Rollbewegung gezielt eine Gleitbewegung zu überlagern.

8. Luftstrom-Wälzmühle nach Anspruch 1 oder 2,
dadurch **gekennzeichnet**,
daß die Mahlwalzen (1a,1b,1c) zusätzlich zur Mahlschüssel (3) rotativ angetrieben sind.

## Claims

1. Air flow rolling mill with at least one stationary, rotary grinding roller, which can be resiliently pressed against a rotated grinding tray or the grinding bed formed by material to be ground and having at least one device for rendering uniform the material to be ground supplied to the following grinding roller, characterized in that for rendering uniform a precompression means (2a,2b,2c) is provided, which is associated with the grinding roller or rollers (1a,1b,1c).

2. Air flow rolling mill according to claim 1 with an integrated sifter arranged above the grinding mill, in which a grinding material-air mixture is supplied substantially from the centre of the grinding mill to the grinding tray and to the grinding rollers, characterized in that a precompression means (2a,2b,2c) is positioned functionally upstream of each grinding roller (1a,1b,1c).

3. Air flow rolling mill according to claim 1 or 2, characterized in that the precompression means (2a,2b,2c) is constructed as a compressing roller (2a,2b,2c) or as a sliding shoe driven by frictional engagement with the grinding tray (3) or the grinding bed (23).

4. Air flow rolling mill according to claim 3, characterized in that the compressing roller or rollers (2a,2b,2c) rests solely by their own weight on the grinding tray (3) or the grinding bed (23).

5. Air flow rolling mill according to one of the claims 3 and 4, characterized in that the diameter of the compressing rollers (2a,2b,2c) is approximately 0.1 to 2.0 times the diameter of the grinding roller or rollers (1a,1b,1c).

6. Air flow rolling mill according to one of the claims 1 to 5, characterized in that each compressing roller (2a,2b,2c) is arranged in such a way that the intersection (S) of its rotation axis (29) with the rotation axis (28) of the grinding tray (3) is on the plane of the grinding path (23), in order to obtain a purely rolling movement.

7. Air flow rolling mill according to any one of the claims 1 to 5, characterized in that each compressing roller (2a,2b,2c) is so positioned that the intersection of its rotation axis (29) with the rotation axis (28) of the grinding tray (3) is above or below the plane of the grinding path (23) in order in planned manner to superimpose a sliding movement on a rolling movement.

8. Air flow rolling mill according to claim 1 or 2, characterized in that the grinding rollers (1a, 1b, 1c) are driven in rotary manner in addition to the grinding tray (3).

## Revendications

1. Broyeur à rouleaux à flux d'air, comportant au moins un rouleau stationaire mobile en rotation qui peut être appliqué de manière élastique sur un plateau de broyage entrainé en rotation ou sur le fit formé sur celui-ci par la matière à broyer et au moins un dispositif pour égaliser la matière à broyer amenée au rouleau suivant, caractérisé par le fait qu'il est prévu pour l'égalisation un dispositif de précompactage (2a, 2b, 2c) qui est associé chaque fois au ou aux rouleau(x) (1a, 1b, 1c).

2. Broyeur à rouleaux à flux d'air selon la revendication 1, comportant un sélecteur intégré qui est disposé au-dessus du broyeur, le mélange matière à broyer - air étant amené essentiellement par le centre au plateau de broyage et aux rouleaux, caractérisé par le fait qu'un dispositif de précompactage (2a, 2b, 2c) est placé en amont de chaque rouleau (1a, 1b, 1c) sur le plan fonctionnel.

3. Broyeur à rouleaux à flux d'air selon la revendication 1 ou 2, caractérisé par le fait que le dispositif de précompactage (2a, 2b, 2c) est agencé sous forme de rouleau de compactage (2a, 2b, 2c) entraîné par adhérence par le plateau de broyage (3) ou le lit (23) de matière à broyer ou sous forme de patin.

4. Broyeur à rouleaux à flux d'air selon la revendication 3, caractérisé par le fait que le (les) rouleau(x) de compactage (2a, 2b, 2c) est (sont) appliqué(s) par leur propre poids sur le plateau de broyage (3) ou le lit (23) de matière à broyer.

5. Broyeur à rouleaux à flux d'air selon l'une des revendications 3 à 4, caractérisé par le fait que le diamètre des rouleaux de compactage (2a, 2b, 2c) est d'environ 0, 1 à 2,0 fois le diamètre du ou des rouleau(x) de broyage (1a, 1b, 1c).

6. Broyeur à rouleaux à flux d'air selon l'une des revendications 1 à 5, caractérisé par le fait que chaque rouleau de compactage (2a, 2b, 2c) est disposé de manière telle que, aux fins d'obtenir un mouvement de roulement pur, le point d'intersection (S) de son axe de rotation (29) avec l'axe de rotation (28) du plateau de broyage (3) soit situé dans le plan de la piste de broyage (23).

7. Broyeur à rouleaux à flux d'air selon l'une des revendications 1 à 5, caractérisé par le fait que chaque rouleau de compactage (2a, 2b, 2c) est disposé de manière telle que le point d'intersection (S) de son axe de rotation (29) avec l'axe de rotation (28) du plateau de broyage (3) soit situé au-dessous ou au-dessus du plan de la piste de broyage (23), aux fins de superposer un mouvement de glissement calculé au mouvement de de rotation.

8. Broyeur à rouleaux à flux d'air selon la revendication 1 ou 2, caractérisé par le fait qu'en plus du plateau de broyage, les rouleaux (1a, 1b, 1c) sont entraînés en rotation.
